# EUROPEAN PATENT SPECIFICATION

(11) **EP 3 718 645 B1**
(45) Date of publication and mention of the grant of the patent: **05.08.2026**
(21) Application number: 19020254.9
(22) Date of filing: 03.04.2019
(51) Int. Cl.: B05C 17/005, B05C 17/00

(54) **MANUAL THERMO-PLASTIC WELDING MACHINE**
MANUELLE THERMOPLASTIKSCHWEISSMASCHINE
MACHINE À SOUDER THERMOPLASTIQUE MANUELLE

(43) Date of publication of application: 07.10.2020
(73) Proprietor: Tracogna, Italo Simone, 34141 Trieste (IT)
(72) Inventor: Tracogna, Italo Simone, 34141 Trieste (IT)
(74) Representative: Rocchetto, Elena

(56) References cited:
- CN-U- 205 097 539
- DE-A1- 102004 043 376
- DE-A1- 102007 008 722
- DE-A1- 4 214 813
- JP-A- H0 985 830
- US-A- 3 066 841
- US-A- 3 744 921
- US-A- 4 065 034
- US-A- 4 916 289
- US-A- 5 725 722
- US-A1- 2007 007 305

## Description

The present invention relates to a welding gun for the thermoplastic materials.

The conventional manual welding machines in accordance with the prior art are extruders of melted plastic materials used for manual thermo-welding of plastic artefacts for the automotive, motorcycling, building industry etc. They are quite cumbersome and uncomfortable for the practical usage. They need a connection with a tube for the transportation of the fusible material, a power cord and a tube for the compressed air for the transportation of the fusible material. So such machines use the fusible material in the form of a continuous cylindric wire gathered in coils. This system, although working, does not allow the quick change of the plastic material's type to use.

An example of a known welding apparatus for plastic materials is disclosed in US 4 916 289 A. This known apparatus uses supply rods of plastic materials.

Apparatuses similar in structure, albeit for hot melt adhesives, wherein glue rods of sticks are melted within the gun, are known from *e.g.* US 3 744 921 A.

The objectives of the present invention are:
- the possibility to substitute easily the thermo-fusible material's type for the welding-repair according to the plastic polymer of the artefact to weld or repair, in a short time and without difficulties;
- the quick and simple cleaning of the internal heating tube in order to change easily the material;
- to provide a welding gun that allows the perfect control, thanks to the manual control;
- having a small, light and handy device in order to facilitate the welding work;
- to provide a hot spout that melts the welding junction channel, to be filled with the welding material.

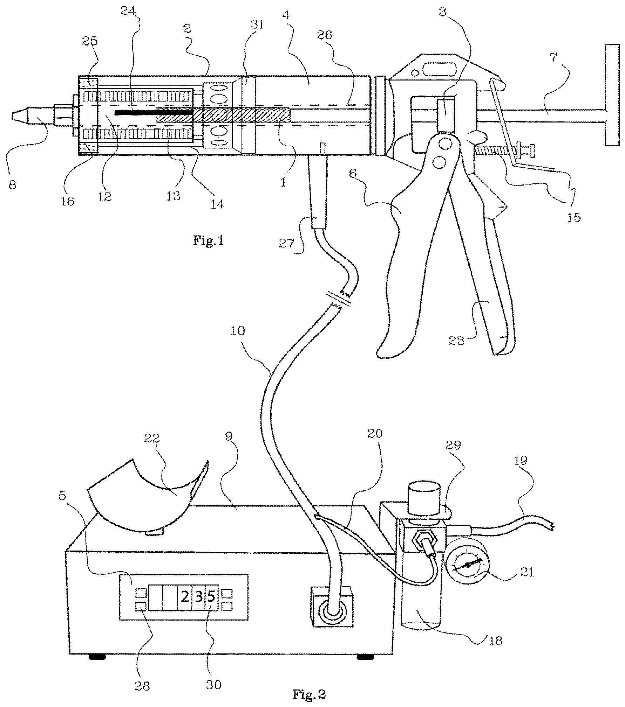

The present invention of the extruder's model has several innovations:
1) The usage of fusible bars (1) of short length limited by necessity, manually insertable in the extruder gun (2), long at the necessary extent for the welding-repair. This allows to change the material (1) without any waste of material and time. When the thermo-fusible material is cold, it has the form of cylindrical small bars.
2) The cleaning of the path inside the extruder (26) is easy, using the simple steel bar of the adequate diameter, even the same used for the progress of the material in the fusion path. This pushing bar is indicated in the drawing Fig.1 (7).
3) The push for the extrusion of the thermo-melted bar is manual and the material is pushed inside the heater (12) with the only strength of the operator's hand. In this way the welding-repair is precise because controlled in real time, even visually, thanks to the small dimension of the extruder. A clutch (3) controls the progress, so it does not let the pushing bar to retreat.
4) The extruder gun's (2) weight is lighter and the dimension smaller than the conventional machines. The device allows to reach medium-high temperatures, those used for the liquefaction of thermo-polymers indicated in the summary. The machine is made up by two main parts: the welding gun (2) and an electronic control unit (9) for the electric alimentation and temperature control, that works on alternating current 220 V. The gun, or extruder, is quite simple in its constitution: some internal resistances (13) heat a container where the fusible material (1) passes; the temperature control is committed to a thermocouple (24) that detects the temperature and keeps it constant; the progress of the fusible bar is manual by means of a lever knob (6). It pushes a metal bar (7) that, in turn, pushes a cylindrical little bar (1) of fusible material inside the fusion block (12). A spout (8) at the exit of the fusion chamber leads the melted polymer towards the part to be welded. The material this spout (8) is made of is a heat conductor. The spout (8) reaches the optimal temperature in order to melt partially the two sides of the artefact to be welded. The filling material is deposited into the hot groove to be welded, so the junction is perfect and quick.
5) The second part of the device is an electric circuit (5) that regulates the temperature. This electric circuit is set inside a metal box (9) from which some alimentation cables (10) of the extruder gun come out. A thin little tube (20) brings air to the extruder gun through the sheath that holds the cables for the electric alimentation of the resistances (13). The air has the aim to cool down the device's external shell (4) in order to avoid burns to the operator during its usage; it is not used to move mechanisms or parts connected with the thermo-fusible material transportation. A filtering system for the cooling air (18) is set outside; the cooling air comes from an external source, like a compressor or a dedicated air pump and could be not always without undesirable particles. A tube (19) puts the air coming from the compressor into the filter.

Although the invention has been explained in relation to its preferred embodiment as mentioned above, it is to be understood that many other possible modifications and variations can be made without departing from the scope of the present invention as defined by the appended claims.

## Claims

1. Welding apparatus for plastic materials comprising:
- a cylinder of thermally fusible material (1);
- a welding or extruder gun (2) with an external metal shell (4), within which are arranged
- a steel tube for material guidance (26), into which the cylinder of thermally fusible material (1) is inserted in use;
- a stainless steel fusion block (12) with some resistances (13) for heating the thermally fusible material;
- an aluminium cylinder (14) that separates the temperatures of the external metal shell (4) from the fusion block (12);
- an aluminium flange (23) that separates the gun front part from the rear part by holes for the passage of cooling air;
- a flange at the front part of the gun, the flange having sloping holes (25) that allow the exit of the apparatus cooling air;
the gun (2) further comprising
- a temperature sensor (24) for electronic control, inserted in the block (12);
- a material pushing bar (7) with handle, for the manual extrusion of the fusible material through the steel tube (26);
- a threaded extruder spout (8) made of a thermally conductive material, screwable to the fusion block (12).

2. Welding apparatus for plastic materials as in claim 1 **characterized in that** it comprises:
- an electronic temperature control unit and electronic alimentation (9), that is separated from the extruder gun (2) and connected with it by an electric cable (10) and a tube (20) for the cooling air;
- a rubber fairlead (27) for said alimentation cables (10) and said tube (20);
- a backing support (22) for the welding gun (2);
- a display (5) with the temperature regulating buttons;
- a stainless steel support (29) for an air filter (18);
- a pressure gauge (21);
- buttons to regulate the temperature (28).

3. Welding apparatus for plastic materials as in claim 1 **characterized in that** said welding or extruder gun (2) also comprises:
- a pushing bar (7) clutch (3);
- a regulation screw (16);
- a pushing bar (7) check lever (15);
- a movement lever (6) for the push of the pushing bar (7).

4. Welding apparatus for plastic materials as in claim 1 **characterized in that** said cylinder of thermally fusible material (1) is of small dimensions, from 7 to 30 cm, made in different kinds of thermally fusible materials for the quick substitution of the polymer to handle as PC/PP/EPDM/ABS/PVC/PE

5. Welding apparatus for plastic materials as in claim 1 **characterized in that** said cylinder of thermally fusible material (1) has a specific color that marks it.

6. Welding apparatus for plastic materials as in claim 2 **characterized in that** it comprises an air filter (18), coming from an external source, like a compressor or a dedicated air pump, positioned outside the box (9) that contains the electric circuit.

7. Welding apparatus for plastic materials as in the previous claims, **characterized in that** the cylindrical body or external shell (4) of the extruder gun (2) can rotate on the longitudinal axis with respect to the grip, thus rotating the spout (8).

## Patentansprüche

1. Schweißvorrichtung für Kunststoffmaterialien, umfassend:
- einen Zylinder aus wärmeschmelzbarem Material (1);
- eine Schweiß- oder Extruderpistole (2) mit einer äußeren Metallhülle (4), in der Folgendes angeordnet ist:
- ein Stahlrohr zur Materialführung (26), in das der Zylinder aus wärmeschmelzbarem Material (1) im Betrieb eingesetzt ist;
- ein Edelstahlschmelzblock (12) mit einigen Widerständen (13) zum Erwärmen des wärmeschmelzbaren Materials;
- ein Aluminiumzylinder (14), der die Temperaturen der äußeren Metallhülle (4) vom Schmelzblock (12) trennt;
- ein Aluminiumflansch (23), der den vorderen Teil der Pistole vom hinteren Teil durch Löcher für den Durchtritt von Kühlluft trennt;
- ein Flansch am vorderen Teil der Pistole, wobei der Flansch schräge Löcher (25) aufweist, die den Austritt der Vorrichtungskühlluft ermöglichen;
wobei die Pistole (2) ferner Folgendes umfasst:
- einen Temperatursensor (24) für die elektronische Steuerung, der in den Block (12) eingesetzt ist;
- eine Materialschubstange (7) mit Handgriff für die manuelle Extrusion des schmelzbaren Materials durch das Stahlrohr (26);
- eine mit Gewinde versehene Extrudertülle (8) aus einem wärmeleitfähigen Material, die mit dem Schmelzblock (12) verschraubbar ist.

2. Schweißvorrichtung für Kunststoffmaterialien nach Patentanspruch 1, **dadurch gekennzeichnet, dass** sie Folgendes umfasst:
- eine elektronische Temperatursteuereinheit und elektronische Versorgung (9), die von der Extruderpistole (2) getrennt und mit dieser durch ein Stromkabel (10) und ein Rohr (20) für die Kühlluft verbunden ist;
- eine Gummidurchführung (27) für die besagten Versorgungskabel (10) und das besagte Rohr (20);
- einen Stützträger (22) für die Schweißpistole (2);
- eine Anzeige (5) mit den Temperaturregeltasten;
- einen Edelstahlträger (29) für einen Luftfilter (18);
- ein Manometer (21);
- Tasten zum Regeln der Temperatur (28).

3. Schweißvorrichtung für Kunststoffmaterialien nach Patentanspruch 1, **dadurch gekennzeichnet, dass** die besagte Schweiß- oder Extruderpistole (2) ferner Folgendes umfasst:
- ein Halteelement (3) für die Schubstange (7);
- eine Regelschraube (16);
- einen Sperrhebel (15) der Schubstange (7);
- einen Bewegungshebel (6) für den Vorschub der Schubstange (7).

4. Schweißvorrichtung für Kunststoffmaterialien nach Patentanspruch 1, **dadurch gekennzeichnet, dass** der besagte Zylinder aus wärmeschmelzbarem Material (1) kleine Abmessungen von 7 bis 30 cm aufweist und aus verschiedenen Arten wärmeschmelzbarer Materialien für den schnellen Austausch des zu verarbeitenden Polymers wie PC/PP/EPDM/ABS/PVC/PE gefertigt ist.

5. Schweißvorrichtung für Kunststoffmaterialien nach Patentanspruch 1, **dadurch gekennzeichnet, dass** der besagte Zylinder aus wärmeschmelzbarem Material (1) eine ihn kennzeichnende spezifische Farbe aufweist.

6. Schweißvorrichtung für Kunststoffmaterialien nach Patentanspruch 2, **dadurch gekennzeichnet, dass** sie einen Luftfilter (18) umfasst, der von einer externen Quelle wie einem Verdichter oder einer speziellen Luftpumpe kommt, der außerhalb des Kastens (9) positioniert ist, der die elektrische Schaltung enthält.

7. Schweißvorrichtung für Kunststoffmaterialien nach den vorhergehenden Patentansprüchen, **dadurch gekennzeichnet, dass** sich der zylindrische Körper oder die Außenhülle (4) der Extruderpistole (2) um die Längsachse in Bezug auf den Griff drehen kann, wodurch die Tülle (8) gedreht wird.

## Revendications

1. Appareil de soudage pour matières plastiques, comprenant :
- un cylindre en matériau thermofusible (1) ;
- un pistolet de soudage ou d'extrusion (2) muni d'une enveloppe métallique externe (4), à l'intérieur de laquelle sont disposés :
- un tube en acier servant au guidage du matériau (26), dans lequel le cylindre de matériau thermofusible (1) est inséré lors de l'utilisation ;
- un bloc de fusion en acier inoxydable (12) muni de résistances (13) destinées à chauffer le matériau thermofusible ;
- un cylindre en aluminium (14) qui isole thermiquement l'enveloppe métallique externe (4) du bloc de fusion (12) ;
- une bride en aluminium (23) qui sépare la partie avant du pistolet de la partie arrière par des orifices destinés au passage de l'air de refroidissement ;
- une bride située à l'avant du pistolet, ladite bride comportant des orifices inclinés (25) permettant la sortie de l'air de refroidissement de l'appareil ;
le pistolet (2) comprenant en outre :
- un capteur de température (24) destiné au contrôle électronique, inséré dans le bloc (12) ;
- une tige de poussée du matériau (7) munie d'une poignée, destinée à l'extrusion manuelle du matériau fusible à travers le tube en acier (26) ;
- une buse d'extrusion filetée (8) réalisée en un matériau thermoconducteur, pouvant être vissée sur le bloc de fusion (12).

2. Appareil de soudage pour matières plastiques selon la revendication 1, **caractérisé en ce qu'**il comprend :
- une unité de régulation électronique de la température et d'alimentation électronique (9), séparée du pistolet d'extrusion (2) et reliée à celui-ci par un câble électrique (10) et un tube (20) pour l'air de refroidissement ;
- un guide-câble en caoutchouc (27) destiné auxdits câbles d'alimentation (10) et audit tube (20) ;
- un support d'appui (22) pour le pistolet de soudage (2) ;
- un écran (5) muni de boutons de réglage de la température ;
- un support en acier inoxydable (29) pour un filtre à air (18) ;
- un manomètre (21) ;
- des boutons de réglage de la température (28).

3. Appareil de soudage pour matières plastiques selon la revendication 1, **caractérisé en ce que** ledit pistolet de soudage ou d'extrusion (2) comprend également :
- un élément de blocage (3) de la barre de poussée (7) ;
- une vis de réglage (16) ;
- un levier de contrôle (15) de la barre de poussée (7) ;
- un levier de déplacement (6) pour la poussée de la barre de poussée (7).

4. Appareil de soudage pour matières plastiques selon la revendication 1, **caractérisé en ce que** ledit cylindre de matière thermofusible (1) est de petites dimensions, comprises entre 7 et 30 cm, et est fabriqué dans différents types de matières thermofusibles afin de permettre le remplacement rapide du polymère à traiter, tel que PC/PP/EPDM/ABS/PVC/PE.

5. Appareil de soudage pour matières plastiques selon la revendication 1, **caractérisé en ce que** ledit cylindre de matériau thermofusible (1) présente une couleur spécifique qui le distingue.

6. Appareil de soudage pour matières plastiques selon la revendication 2, **caractérisé en ce qu'**il comprend un filtre à air (18), alimenté par une source externe, telle qu'un compresseur ou une pompe à air dédiée, positionné à l'extérieur du boîtier (9) qui contient le circuit électrique.

7. Appareil de soudage pour matières plastiques selon les revendications précédentes, **caractérisé en ce que** le corps cylindrique ou l'enveloppe externe (4) du pistolet d'extrusion (2) peut tourner autour de l'axe longitudinal par rapport à la poignée, entraînant ainsi la rotation de la buse (8).
